# EUROPÄISCHE PATENTANMELDUNG

(11) **EP 2 138 382 A1**
(43) Veröffentlichungstag der Anmeldung: **30.12.2009**
(21) Anmeldenummer: 08104537.9
(22) Anmeldetag: 25.06.2008
(51) Int. Cl.: B62D 25/04

(54) **Säule als Teil einer Karosseriestruktur eines Kraftwagens**

(71) Anmelder: Ford Global Technologies, LLC, Dearborn, MI 48126 (US)
(72) Erfinder: Koepcke, Ulrich, 21706 Drochtersen (DE); Hintzen, Dieter, 52249, Eschweiler (DE); Lichter, Martin, 50374, Erftstadt (DE); Kunkel, Bernhard, 50733, Köln (DE)
(74) Vertreter: Dörfler, Thomas

(57) **Zusammenfassung**

Die Erfindung betrifft eine Säule als Teil einer Karosseriestruktur (K) eines Kraftwagens, wobei die Säule (1,1l,1r) zumindest im Bereich einer Scheibe (S) ein Hohlprofil (2) mit einem geschlossenen Querschnitt aufweist. Das Hohlprofil (2) ist zum Anschluss an die Karosseriestruktur (K) im Bereich des oberen und unteren Scheibenrandes mit jeweils einem Anschlussblechteil (3) verbunden, so daß das Hohlprofil (2) über die beiden Anschlussblechteile (3) mit der Karosseriestruktur (K) verbunden ist. Die beiden Anschlussblechteile (3) sind über ein Verbindungsglied (8) eines Anschlussbleches (9) fest miteinander verbunden, wobei das Anschlussblech (9) eine Türdichtung für eine Fahrzeugtür aufnimmt.

Damit läßt sich eine leicht zu montierende A-Säule herstellen, die ausschließlich aus einem Hohlprofil im Bereich der Scheibe besteht und die eine einfache Dichtungsanordnung für die Fahrzeugtür erlaubt.

## Beschreibung

Die Erfindung betrifft eine Säule, insbesondere eine A-Säule, als Teil einer Karosseriestruktur eines Kraftwagens, wobei die A-Säule ein Hohlprofil mit einem geschlossenen Querschnitt aufweist.

In der WO 2006/122775 A1 ist ein konventionelle ein A-Säule mit einer mehrteiligen äußeren Blechstruktur beschrieben. Sie verfügt über seitliche Schweißflansche, die gleichzeitig als Klebeflansche zur Aufnahme einer Windschutzscheibe bzw. zur Aufnahme einer Dichtungsstruktur und zum Anbinden an die Karosseriestruktur gedacht sind. In der Blechstruktur ist als Hohlprofil ein Versteifungsrohr angebracht. Zwar ist hier die Anbindung des Versteifungsrohrs an die Karosseriestruktur automatisch gegeben, jedoch ergeben sich aufgrund der Dichtungsflansche wieder die Probleme der eingeschränkten Sicht nach vorne, trotz des integrierten Versteifungsrohres.

Aus der DE 198 02 702 A1 ist eine A-Säule bekannt, die im Bereich der Windschutzscheibe als Hohlprofil ausgebildet ist. Infolge des geschlossenen Querschnittes des Hohlprofiles kann dieses mittels eines für eine Montagestraße zur Montage der Karosseriestruktur aufwändigen und zeitraubenden Verfahrens wie WIG-Schweißen, Löten oder Kleben an die Karosseriestruktur angebunden werden. Das Hohlprofil weist einen aufwändig gestalteten, komplexen, mehrteiligen Querschnitt mit seitlichen Schlitzen auf, durch welche zur für die Montage günstigeren Punktschweißung ein angepasster Schweißroboterarm mit einer Elektrode in das Hohlprofil eingreifen kann. Insbesondere durch die mehrteilige Gestaltung wird das Hohlprofil relativ schwer und aufwendig zu fertigen. Auch ist die Befestigung der Türdichtungen schwierig, zumindest müssen zusätzliche Dichtflansche oder Befestigungspunkte vorgesehen werden.

In der DE 10 2004 013 511 ist eine A-Säule offenbart, die im Bereich der Windschutzscheibe aus einem zweiteiligen Hohlprofil besteht. Die Anbindung an die Karosseriestruktur erfolgt am unteren Windschutzscheibenrand über eine Montageplatte, mit der das Hohlprofil im Bereich des Windlaufs verbunden ist. Im oberen Rand der Windschutzscheibe erfolgt eine formschlüssige Anbindung des Hohlprofils an die Dachkarosseriestruktur über einen Freischnitt. Bei der Anbindung des Hohlprofils sind von daher verschiedene Fügeverfahren notwendig, um eine strukturelle Verbindung des Hohlprofils zur restlichen Karosseriestruktur zu gewähren. Zumindest ist das kostengünstige Punktschweißverfahren nicht anwendbar, wen eine hochfeste Anbindung erfolgen soll. Auch hier ist die Befestigung der Türdichtungen schwierig und es müssen zusätzliche Dichtflansche oder Befestigungspunkte vorgesehen werden.

Der Erfindung liegt daher die Aufgabe zugrunde, eine Säule mit einem Hohlprofil im Bereich der Scheiben zu schaffen, die einfach in die Karosseriestruktur zu integrieren ist und eine einfache Dichtungsanordnung erlaubt.

Die gestellte Aufgabe wird erfindungsgemäß dadurch gelöst, indem das Hohlprofil zum Anschluss an die Karosseriestruktur im Bereich des oberen und unteren Scheibenrandes mit jeweils einem Anschlussblechteil verbunden ist, das Hohlprofil über die beiden Anschlussblechteile mit der Karosseriestruktur verbunden ist, die beiden Anschlussblechteile über ein Verbindungsglied eines Anschlussbleches fest miteinander verbunden sind, und das Anschlussblech eine Türdichtung für eine Fahrzeugtür aufnimmt.

Dank der zusätzlichen Anschlussblechteile kann die A-Säule vor ihrer Einbindung in die Karosseriestruktur an von der Montagestraße zur Montage der Karosseriestruktur entfernten Orten so vorgefertigt werden, dass die vorgefertigte A-Säule vorteilhaft mittels Punktschweißens in die Karosseriestruktur in die Karosseriestruktur eingebunden werden kann. Dennoch kann der in Hinsicht auf eine Verwindungssteifigkeit der A-Säule geschlossene Querschnitt des Hohlprofiles erhalten bleiben. Damit kann im Vergleich zu einem offenen Querschnitt der geschlossene Querschnitt kleiner ausgelegt sein, welches neben einer Gewichtsersparnis den Vorteil hat, dass ein Gesichtsfeld eines Fahrers des Kraftwagens weniger stark durch die A-Säule eingeengt werden muss.

Um die Sicht für den Fahrer sowenig wie möglich einzuschränken, wird ein separates Anschlussblech vorgesehen, mittels dem die beiden Anschlussblechteile verbunden sind. Dieses Anschlussblech benötigt keinen direkten Kontakt zum Hohlprofil - zumindest nicht im mittleren Bereich der Scheibe - und schränkt so die Sicht entlang des Hohlprofils nicht ein. Da andererseits das Anschlussblech als konventionelles Blechteil ausgeführt sein kann, ist die Befestigung einer Türdichtung auf oder an dem Anschlussblech ohne großen Aufwand möglich.

Insbesondere wenn das Anschlussblech in den Türrahmen der Karosserie eingefügt wird, kann ein umlaufender Dichtungsflansch gebildet werden, auf den die Türdichtung problemlos aufgeschoben werden kann. Ein Teil diese Dichtungsflansches wird dann durch einen Dichtungsflansch des Anschlussbleches gebildet.

Vorteilhaft sind die beiden Anschlussblechteile und das Anschlussblech jeweils separate Bauteile, die miteinander verbunden sind. Dann können die Anschlussblechteile so gestaltet und dimensioniert werden, daß sie die wirkenden Karosseriekräfte in diesem Bereich der Säule auf das Hohlprofil übertragen können und gleichzeitig die Fertigungsrestriktionen eingehalten werden. Wesentliche Auslegungsparameter für die Anschlussblechteile sind Blechdicke, geometrische Formgebung, Material und Materialgüte. Dagegen kann das Anschlussblech aus einem anderen Blech mit geringerer Blechdicke und aus einem anderen Material gefertigt sein.

In einer weiteren vorteilhaften Ausführung ist zumindest ein Anschlussblechteil mit dem Anschlussblech einteilig ausgeführt ist. Natürlich können auch beide Anschlussblechteile mit dem Anschlussblech einteilig ausgeführt ist. Wesentlicher Vorteil ist hier die einfachere Herstellung. Vorteilhaft kann dabei die einteilige Ausführung aus sogenannten "Tailored Blanks" bestehen, d. h. aus Blechplatinen, die aus verschiedenen Blechen unterschiedlicher Dicke und/oder Materialgüte zusammengesetzt sind, bevor sie durch ein Verformungsverfahren wie Tiefziehen in ihre endgültige Form gebracht werden.

Vorteilhaft bilden Anschlussblech und Hohlprofil einen Scheibenrahmen für die Scheibe. Dann kann eine Seitenscheibe direkt auf die beiden Teile montiert werden, vorzugsweise durch Kleben.

Vorzugsweise umfasst das Anschlussblechteil eine erste Anschlussseite mit einer Hohlprofilaufnahme für das Hohlprofil, in der das Hohlprofil mittels eines Fügeverfahrens kraft- und/oder formschlüssig verbunden ist. Hierzu kann die Hohlprofilaufnahme als Steckaufnahme ausgebildet sein, in die das Hohlprofil endseitig mit einem bestimmten Endabschnitt hineingesteckt wird. Hierbei können Hohlprofilaufnahme und Endabschnitt so dimensioniert sein, dass mit dem Einstecken ein erstes Festhalten mittels Festklemmens des Endabschnittes in der Hohlprofilaufnahme erfolgen kann. Als Fügeverfahren kommen beispielsweise ein Festklemmen und/oder Verrasten in Betracht, wobei beim Festklemmen ein zusätzliches seitliches Zusammenquetschen der Hohlprofilaufnahme mit dem dort aufgenommenen Endabschnitt erfolgen kann. Als vorteilhafter wird ein Einkleben oder -Löten, insbesondere ein Hartlöten, erachtet. Ein in Hinsicht einer erzielbaren Festigkeit verlässliches und somit bevorzugtes Fügeverfahren ist Inertgasschweißen, insbesondere Wolfram-Inertgas-Schweißen (WIG). Letztlich können für die Wahl des geeigneten Fügeverfahrens der Werkstoff oder die Werkstoffe sein, aus dem das Hohlprofil, die Anschlussblechteile und/oder das weiter unten näher erläuterte Verbindungsgliedes gefertigt sind. Hierbei kommen letztlich alle Werkstoffe in Betracht, die insbesondere den Festigkeitsanforderungen an die A-Säule gerecht werden und die mit der Karosseriestruktur verbindbar sind. Hierzu zählen beispielsweise Metalle, wie Aluminium und Stahl, und Kunststoffe. Als Stahlsorte kommen übliche mikrolegierte Feinbleche mit erhöhter Streckgrenze oder Borstähle in Betracht. Da dieses endseitige Zusammenfügen von Hohlprofil und Anschlussblechteile losgelöst von der Montage der Karosseriestruktur sowie in einer für das Fügeverfahren günstigen Position der A-Säule erfolgen kann, kann ein verfahrenstechnisch optimales Fügen sowie eine leichtere Kontrolle der entstandenen Verbindung erfolgen. Somit kann die Montage der Karosseriestruktur in Hinsicht auf den Einbau der A-Säule zeitlich gestrafft werden.

Zur ihrer Anbindung bzw. zu der der A-Säule in die Karosseriestruktur kann das Anschlussblechteil jeweils eine zweite Anschlussseite aufweisen, die zweckmäßigerweise beabstandet zu der ersten Anschlussseite ist. Die zweite Anschlussseite kann eine Struktur aufweisen, die eine Verbindung des Anschlussblechteiles mittels Punktschweißens erlaubt. Hierzu können übliche konstruktive Vorkehrungen, wie Flansche, Laschen und dergleichen, vorgesehen sein.

Vorzugsweise sind die beiden Anschlussblechteile unter Ausbildung eines Anschlussbleches über ein Verbindungsglied fest miteinander verbunden. Hierdurch kann eine in bestimmter Weise beabstandet zum Hohlprofil und zumindest mit einer Wegkomponenten in Längsrichtung verlaufende, vorzugsweise brückenartige Verbindung hergestellt, die die Steifigkeit, insbesondere die Verwindungssteifigkeit der A-Säule erhöhen kann. Dank seiner festen Verbindung mit den Anschlussblechen kann das Verbindungsglied zugleich als Abstandshalter zur Beabstandung beider Anschlussblechteile wirken und die relative Lage der Anschlussblechteile zueinander fixieren. Zug- und Druckkräfte in Längsrichtung auf das Hohlprofil können somit auch durch das Verbindungsglied aufgenommen werden. Verbindungsglied und Anschlussblechteile können mittels PunktSchweißens zusammengefügt werden. Somit kann die A-Säule in der Weise vormontiert werden, dass zunächst die Anschlussblechteile endseitig auf das Hohlprofil gesteckt und dann mit dem Verbindungsglied vorzugsweise mittels PunktSchweißens unter Ausbildung des Anschlussbleches verbunden werden, wodurch sie auch in Hinsicht auf ihre relative Lage zu dem Hohlprofil fixiert sind. Im Anschluss kann das Hohlprofil vorzugsweise mittels WIG-Schweißens mit den Anschlussblechteilen fest verbunden werden, so dass die A-Säule zumindest in Hinsicht auf ihr Struktur tragendes Strukturbauteil vorgefertigt ist. Vorzugsweise kann die zweite Anschlussseite so mit der Befestigungsseite des Verbindungsglied zumindest teilweise und/oder abschnittsweise überlappend angeordnet sein, dass in Richtung auf die an das Anschlussblech angrenzende Karosseriestruktur, jeweils bevorzugt mittels Punktschweißens, beide Seiten zuerst zusammenverbunden und dann beide zusammen oder eine der Seiten in Überlappung mit der Karosseriestruktur gebracht miteinander verbunden werden können. Hierbei kann an entsprechender Stelle der Karosseriestruktur zum Beispiel ein Verbindungsblech, eine Lasche, ein Zapfen oder dergleichen vorgesehen sein.

Vorteilhaft kann das Verbindungsglied eine abgewinkelte oder zweischenklige Form aufweisen. Hierdurch wird das Verbindungsglied in einem entsprechend ausgebildeten Bogen längs des Hohlprofiles geführt. Zweckmäßigerweise greift das Verbindungsglied seitlich an einer Befestigungsseite des jeweiligen Anschlussblechteiles an. Somit kann das Verbindungsglied mit den Anschlussblechteilen und somit das Anschlussblech ein im Wesentlichen ebenes Bauteil ausbilden, das dank der zweischenkligen Form mit dem Hohlprofil eine etwa dreiseitige Außenkontur aufweisen kann. Hierdurch kann die Verwindungssteifigkeit der A-Säule weiter erhöht werden.

Die beiden Schenkel, d.h. ein in Einbaulage unterer Schenkel und ein in Einbaulage oberer Schenkel, können jeweils eine Seite des Dreiseits und das Hohlprofil mit den endseitig verbundenen Anschlussblechteilen die dritte Seite des Dreiseits ausbilden. Der untere Schenkel kann in Einbaulage etwa in Fahrtrichtung angeordnet sein. Diese Ausbildungsform ist besonders für Fahrzeuge mit einem sogenannten One-Box-Design, das in sogenannten Van-Automobilformen mit weit in Fahrtrichtung nach vorn gezogener Windschutzscheibe Anwendung findet und bei dem die A-Säule von einer Dachstruktur entsprechend flach nach vorn zur Motorhaubenstruktur angeordnet ist. Hierdurch bildet sich zwischen Dachstruktur und Motorhaubenstruktur längs der A-Säule einen seitlichen Zwickel aus, welches durch die erfindungsgemäße A-Säule bzw. das erfindungsgemäße Strukturbauteil der A-Säule mit Hohlprofil und Anschlussblech ausgefüllt bzw. umrandet wird.

Zumindest einer der beiden Schenkel des Verbindungsgliedes kann einen Anschlussabschnitt zur Anbindung des Verbindungsgliedes an die Karosseriestruktur aufweisen. Vorzugsweise umfasst der in Einbaulage untere Schenkel einen in Einbaulage mit einer Komponente nach unten weisenden Anschlussabschnitt. Dadurch kann eine stabilere und verwindungssteifere Anbindung des Anschlussbleches an die Karosseriestruktur erzielt werden. Hierzu kann der Anschlussabschnitt, ähnlich wie der Verbindungsabschnitt des Schenkels sowie die Befestigungsseite und die zweite Anschlussseite des Anschlussblechteiles, einen sich zumindest teilweise und/oder abschnittsweise über den Anschlussabschnitt erstreckenden Flansch, Lasche oder dergleichen aufweisen, der zur Verbindung mit der Karosseriestruktur einen ihm zugeordneten Gegenflansch der Karosseriestruktur überlappt, so dass eine Verbindung beider Flansche durch Punktschweißen möglich ist.

Das Strukturbauteil kann ferner eine der Außenkontur angepasste Innenöffnung zur Aufnahme einer Seitenscheibe umfassen. Hierdurch kann das Sichtfeld eines Fahrers erweitert werden. Um die Sichtfelderweiterung zu optimieren, sollte unter Wahrung einer bestimmten Verwindungssteifigkeit die Öffnung möglichst groß ausfallen. Als eine Maßnahme kann vorgesehen sein, dass das Hohlprofil eine längliche Querschnittsform mit einer in Querschnittslängsrichtung weisenden Querschnittslängsachse aufweist und dass die Querschnittslängsachse in Einbaulage der A-Säule in der Karosseriestruktur zumindest etwa zu einem für einen Fahrer vorgesehenen Ort in einem von der Karosseriestruktur begrenzten Innenraum hin weist. Als Querschnittsform eignen sich beispielsweise elliptische, elliptoide oder tropfenartig runde Formen.

Vorzugsweise kann ein in Einbaulage inneres Abdeckungsteil vorgesehen sein. Derartige Abdeckungsteile können als Dekorteil dienen. Ferner können sie Nutzern des Kraftwagens bei einem Aufprall vor Verletzungen durch Stoß gegen die A-Säule schützen, indem Bewegungsenergien etwa durch weiche Außenoberfläche, nachgiebige Strukturen, Schaumstoffausspritzungen und/oder mittels eines im Abdeckungsteil gelagerten Airbags absorbieren. Vorzugsweise weist das innere Abdeckungsteil zur Abdeckung des Hohlprofiles von Innen einen vorteilhaft einfachen Aufbau mit einem länglichen, etwa U-förmigen und zwei Abdeckungsschenkel aufweisenden Querschnitt, der eine in Querschnittslängsrichtung weisenden Querschnittslängsachse umfasst. Zur Optimierung des Fahrersichtfeldes kann die Querschnittslängsachse in Einbaulage der A-Säule in der Karosseriestruktur zu einem für den Fahrer vorgesehenen Ort in einem von der Karosseriestruktur begrenzten Innenraum hin weisen. Zu ihrer Lagefixierung können die beiden Abdeckungsschenkel das Hohlprofil in Einbaulage seitlich übergreifen

Das Hohlprofil kann ferner einen ersten Aufnahmeabschnitt für einen seitlichen Aufnahmerandabschnitt einer Windschutzscheibe aufweisen. Vorzugsweise erstreckt sich der erste Aufnahmeabschnitt über einen Umfangabschnitt und in Längsrichtung des Hohlprofiles. Zweckmäßigerweise ist erste Aufnahmeabschnitt entsprechend der Form des Aufnahmerandabschnittes der Windschutzscheibe abgeflacht. Somit kann die Windschutzscheibe unmittelbar auf das geschlossene Hohlprofil aufgebracht , vorzugsweise aufgeklebt werden, ohne dass das Fahrersichtfeld beschränkende seitliche Flansche oder dergleichen vorgesehen sein müssen. Selbstverständlich können zusätzlich übliche Dichtungsstrukturen zur Abdichtung der Windschutzscheibe vorgesehen sein.

Das Hohlprofil kann ferner einen umfänglich zum ersten Aufnahmeabschnitt beabstandeten zweiten Aufnahmeabschnitt für einen seitlichen Aufnahmerandabschnitt der Seitenscheibe aufweisen. Dieser kann sich ebenfalls über einen Umfangabschnitt und in Längsrichtung des Hohlprofiles erstrecken und kann zudem entsprechend der Form des Aufnahmerandabschnittes der Seitenscheibe abgeflacht sein. Beide Aufnahmeabschnitte können über den Umfang des Hohlprofiles so zusammenlaufen, dass sie einen V-förmigen Umfangsabschnitt des Hohlprofiles bilden. Wie der längliche Querschnitt, so können auch die Abflachungen der Aufnahmerandabschnitte die Steifigkeit der A-Säule erhöhen.

Das Hohlprofil kann mittels Hydroforming oder Innenhochdruck-Umformen (IHU) in eine bestimmte Querschnittsform hinein ausgeformt sein. Beim Innenhochdruck-Umformen wird das Hohlprofil durch mittels einer Wasser-Öl-Emulsion übertragenen Innendruck aufgeweitet und gleichzeitig durch eine Axialkraft gestaucht. Das Werkstück befindet sich vor dem Aufweiten in einem geschlossenen Werkzeug mit einer Innenkontur oder Werkzeuggravur und nimmt durch den Innendruck die Form der Werkzeuggravur an. Der Innendruck wird übertragen, die Einleitung der Axialkraft erfolgt über zwei Dichtstempel an den Hohlprofilenden.

Alternativ kann das Hohlprofil auch aus zusammengefügten oder gerollten Blech-oder Einzelteilen hergestellt sein. Als Fügeverfahren kommen dabei alle geeigneten Verfahren zur Herstellung einer Längsnaht in Frage, wie Laserschweißen, Löten, Kleben, Lichtbogenschweißen etc.. Als Materialen sind alle Werkstoffe geeignet, die an dieser Stelle die zu übertragenden Belastungen und Aufgaben übernehmen können, insbesondere sind dies hochfeste Stähle, aber auch Leichtmetalle wie Aluminium, Magnesium und deren Legierungen sowie geeignete Kunststoffe bzw. Faserverbundwerkstoffe.

Vorzugsweise an ein in Einbaulage oberes Anschlussblechteil kann in Verlängerung desselben ein Verbindungsstück als Teil der A-Säule zur Anbindung derselben an eine Dach- und/oder Seitenrahmenstruktur und/oder als Teil der Dach- und/oder Seitenrahmenstruktur zur Anbindung an eine B-Säule oder C-Säule vorgesehen sein. Hierbei ist das Verbindungsstück als Blechteil zweckmäßig so profiliert, dass es vorzugsweise endseitig mittels Punktschweißen mit dem Anschlussblech und/oder mit der Karosseriestruktur verbunden werden kann.

Zur Abdeckung des Hohlprofiles kann ein in Einbaulage äußeres Abdeckungsteil vorgesehen sein. Das äußere Abdeckungsteil kann in Einbaulage der A-Säule sowie der Windschutzscheibe und der Seitenscheibe an den Aufnahmerandabschnitten seitlich und von Außen über die Scheiben ragen. Somit kann das äußere Abdeckungsteil dichtend an den Aufnahmerandabschnitten anliegen. Das äußere Abdeckteil kann beispielsweise in einer Lücke zwischen den beiden Scheiben über eine vorgesehen Schnappverbindung eingesetzt und/oder in eine vorgesehene Dichtungsstruktur integriert mit den Scheiben verbunden sein. Das äußere Abdeckungsteil kann zumindest an seiner in Einbaulage äußeren Oberfläche als Dekor ausgebildet sein. Zudem kann das äußere Abdeckungsteil durch seine Ausbildung zur Verringerung eines Windwiderstandes beitragen. Dank umfänglich eng zueinander angeordneter Aufnahmeabschnitte, die im Querschnitt des Hohlprofiles V-förmig zusammenlaufen können, können die Aufnahmerandabschnitte der Scheiben entsprechend eng zueinander angeordnet sein. Das äußere Abdeckungsteil kann so dimensioniert und angeordnet sein, dass es senkrecht zur Längsquerachse des Hohlprofiles bis an einen äußeren Rand des Hohlprofiles heranragt oder kleiner als eine Ausdehnung des Hohlprofiles senkrecht zur Querschnitteslängesachse ist. Dadurch kann verhindert werden, dass das Gesichtsfeld des Fahrers durch das äußere Abdeckungsteil eingeengt wird.

In dem Zwischenraum zwischen den Scheiben, dem äußeren Abdeckteil und dem Hohlprofil können zusätzliche Vorrichtungen, wie Antenne oder Messfühler, integriert sein.

Die Aufgabe wird ferner durch ein Verfahren zur Montage und zum Einbau einer A-Säule gemäß einer der zuvor beschriebenen Ausführungsformen in eine Karosseriestruktur eines Fahrzeuges gelöst, wobei die A-Säule ein Hohlprofil und zwei Anschlussblechteile zur Anbindung der A-Säule an die Karosseriestruktur umfasst. Hierzu sind die folgende Verfahrensschritte notwendig: Bereitstellen des Hohlprofiles und der Anschlussblechteile, Verbinden der Endabschnitte des Hohlprofiles mit jeweils einem Anschlussblechteil durch WIG-Schweißen, Löten oder Kleben sowie Verbinden der Anschlussblechteile mit der angrenzenden Karosseriestruktur durch Punktschweißen.

Zweckmäßigerweise weisen die Anschlussblechteile an ihren ersten Anschlussseiten eine Steckaufnahme für das Hohlprofil auf, so dass das Hohlprofil vor seiner kraftschlüssigen, festen Verbindung mit den Anschlussteilen in Längsrichtung endseitig in die Steckaufnahmen gesteckt wird.

In einem weiteren Verfahrensschritt können die Anschlussblechteile nach oder vor ihrer festen Verbindung mit dem Hohlprofil unter Ausbildung eines Anschlussbleches über ein Verbindungsglied fest miteinander verbunden bzw. vormontiert werden.

Die vorliegende Erfindung wird im Folgenden anhand mehrerer in einer Zeichnung dargestellter Ausführungsbeispiele näher erläutert. In der Zeichnung zeigen:
- Fig. 1: eine perspektivische Seitenansicht einer ersten Ausführungsform einer A-Säule,
- Fig.2: eine perspektivische Seitenansicht von Einzelelemente der A-Säule gemäß Figur 1,
- Fig.3: eine perspektivische Seitenansicht der A-Säule gemäß Figur 1 mit zusätzlichem Anschlusselement,
- Fig. 4: eine perspektivische Seitenansicht einer zweiten Ausführungsform der A-Säule,
- Fig. 5: eine perspektivische Seitenansicht auf ein Verbindungsteil für die A-Säule gemäß Figur 4,
- Fig.6: eine schematische Querschnittsansicht der ersten Ausführungsform mit angrenzenden Bauteilen eines Kraftwagens,
- Figuren 7a bis 7c: perspektivische Seitenansichten zur Montage zweier A-Säulen gemäß Figur 4 in eine Karosseriestruktur,
- Fig. 8: eine Seitenansicht auf eine Innenseite einer rechten Karosserieseite der Karosseriestruktur mit der A-Säule gemäß Figur 4 und
- Fig. 9: eine Seitenansicht auf die Innenseite der rechten Karosserieseite gemäß Figur 8, jedoch mit dem Verbindungsteil gemäß Figur 5.

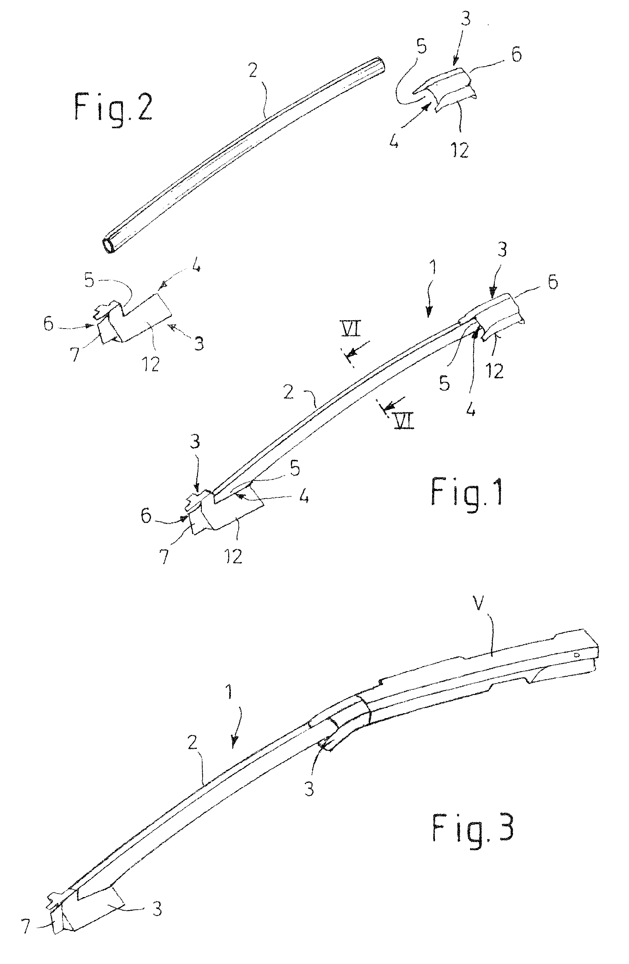

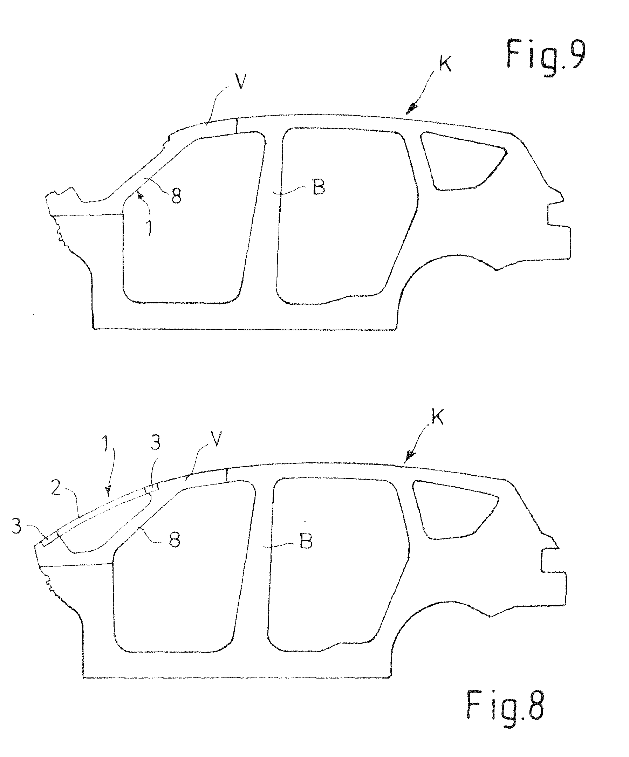

In den Figuren 1 bis 6 werden eine erste und eine zweite Ausführungsform einer A-Säule 1 mit einem Hohlprofil 2, das einen mittleren Abschnitt der A-Säule 1 bildet, und zwei erfindungsgemäße Anschlussblechteile 3 dargestellt, die zum Anschluss des Hohlprofils 2 an eine ausschnittshaft in Figur 8 und 9 dargestellte Karosseriestruktur K jeweils über einer erste Anschlussseite 4 endabschnittsseitig mit Hohlprofil 2 fest verbunden sind. Hierzu weisen die Anschlussblechteile 3 an ihrer ersten Anschlussseite 4 jeweils eine Hohlprofilaufnahme 5 für das Hohlprofil 2 auf, in der das Hohlprofil 2 angeordnet ist und mittels Wolfram-Inertgas-Schweißen (WIG) kraft- und formschlüssig mit den jeweiligen Anschlussblechteil 3 verbunden ist. Die Anschlussblechteile 3 weisen zudem jeweils eine von der ersten Anschlussseite 4 beabstandete zweite Anschlussseite 6 auf, über die die Anschlussblechteile 3 und damit die A-Säule 1 mit der Karosseriestruktur K fest verbunden werden kann. Hierzu umfasst die zweite Anschlussseite einen Anschlussflansch 7, der zur Verbindung der A-Säule 1 ein hier nicht dargestelltes geeignetes Blechbauteil der Karosseriestruktur so überlappt, dass eine automatisierte Punktschweißung möglich ist.

Die Figuren 1 und 2 geben die erste Ausführungsform wieder, wobei in Figur 2 das Hohlprofil 2 und die Anschlussblechteile 3 voneinander losgelöst wiedergegeben sind. In Figur 1 sind Hohlprofil 2 und Blechteile 3 fest miteinander verbunden gezeigt. In dieser Form kann die A-Säule an einem von einer Montagestraße zur Montage der Karosseriestruktur K entfernten Ort vormontiert, eventuell zwischengelagert und später bei der Montage der Karosseriestruktur in dieselbe montiert werden. Figur 3 stellt in einer perspektivischen Seitenansicht ebenfalls die erste Ausführungsform der A-Säule gemäß Figur 1 dar, wobei zusätzlich ein Verbindungsstück V vorgesehen ist, das an der zweiten Anschlussseite 6 des in Einbaulage oberen Anschlussblechteils 3 verbunden ist und das, abhängig von dem Aufbau der vorgesehenen Karosseriestruktur, ein Teil zum Autodach zugehörigen Karosseriestruktur K bildet oder, in einer dritten Ausführungsform der A-Säule, eine Verlängerung der A-Säule ist. Wie den Figuren 8 und 9 entnehmbar, überbrückt das Verbindungsstück V in der Karosseriestruktur K eine Lücke zwischen einer B-Säule B bzw. einer der Zeichnung nicht entnehmbaren, in Fahrtrichtung vorderen Dachstruktur und der A-Säule 1. Damit ist beispielhaft eine Abwandlung in der Vormontage gezeigt, indem bereits dort ein zusätzliches Bauteil der Karosseriestruktur, d.h. hier das Verbindungsstück V, an der A-Säule vormontiert werden kann.

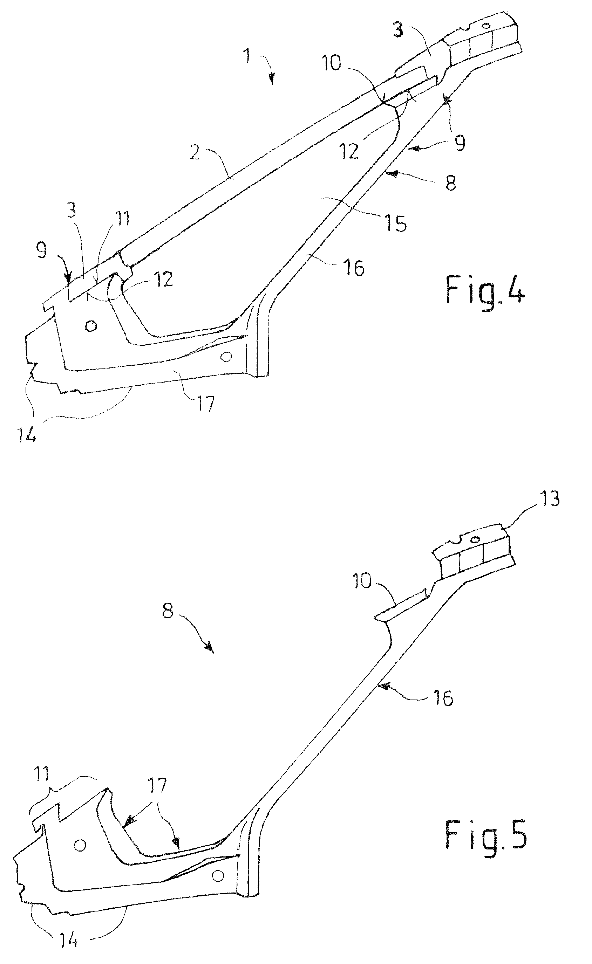

Figur 4 zeigt eine perspektivische Seitenansicht einer zweiten Ausführungsform der A-Säule 1, die, abweichend zu der in Figur 1 gezeigten ersten Ausführungsform der A-Säule 1, ein zusätzliches Verbindungsglied 8 aufweist, das in einer Einzeldarstellung in Figur 5 wieder gegeben ist. Durch das Verbindungsglied 8 werden die beiden Anschlussblechteile 3 unter Ausbildung eines Anschlussbleches 9 fest miteinander verbunden. Hierdurch bilden das Anschlussblech 9 und das Hohlprofil 2 die A-Säule 1 zu einem ebenen Strukturbauteil mit einer etwa dreiseitigen Außenkontur aus, wobei das Verbindungsglied 8 eine abgewinkelte, etwa zweischenklige Form aufweist, die zwei Seiten der dreiseitigen Außenkontur bilden. Wie Figur 5 entnehmbar, weist das Verbindungsglied 8 zwei Verbindungsabschnitte, einen in Einbaulage oberen Verbindungsabschnitt 10 und einen in Einbaulage unteren Verbindungsabschnitt 11 auf, über die das Verbindungsglied an Befestigungsseiten 12 der Anschlussblechteile 3 mittels Punktschweißens verbunden werden kann. Hierzu überlappen sich jeweils Befestigungsseite 12 und oberer Verbindungsabschnitt 9 bzw. Befestigungsseite 12 und unterer Verbindungsabschnitt 10. Ferner überlappen sich in diesem Ausführungsbeispiel auch die zweiten Anschlussseiten 6 mit dem jeweils zugehörigen Verbindungsabschnitt 10, 11, so dass auch hier eine feste Anbindung durch Punktschweißen erfolgt.

Um ebenfalls eine Punktschweißung zu ermöglichen, grenzt das Verbindungsglied 8 mit Anschlussabschnitten, einem oberen Anschlussabschnitt 13 und einem unteren Anschlussabschnitt 14, an die Karosseriestruktur K dieselbe randseitig überlappend an, wobei sich der untere Anschlussabschnitt 14 zu zwei Seiten zur Karosseriestruktur hin erstreckt. Hierdurch wird die Festigkeit der A-Säule 1 weiter gesteigert.

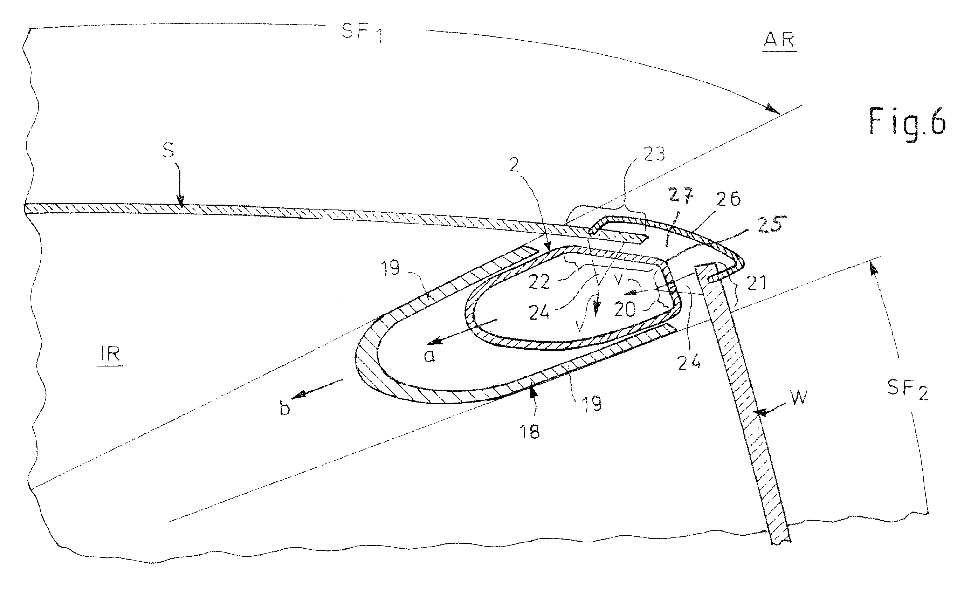

Die A-Säule 1 weist in ihrer zweiten Ausführungsform eine Innenöffnung 15 auf, die durch das Anschlussblech 8 mit einem in Einbaulage oberen Schenkel 16 und einem zur Innenöffnung 15 mittig abgeknickten unteren Schenkel 17, sowie durch das Hohlprofil 2 abgegrenzt wird. Hierdurch wird ein in Figur 6 gezeigtes Sichtfeld SF1 für einen hier nicht dargestellten Fahrer bezüglich der A-Säule 1 möglichst groß gehalten.

In der Figur 6 wird in einer schematischen Querschnittsansicht die erste Ausführungsform der A-Säule 1 gezeigt, wobei an der A-Säule 1 eine Seitenscheibe S und Windschutzscheibe W angelagert sind. Der Querschnitt des Hohlprofiles 2 entspricht etwa dem in Figur 1 gezeigtem Querschnittsverlauf VI-VI. Deutlich der Figur 6 entnehmbar ist, dass das Hohlprofil 2 eine längliche Querschnittsform mit einer in Querschnittslängsrichtung weisenden Querschnittslängsachse a aufweist. Die Querschnittslängsachse a ist hierbei so ausgerichtet, dass sie in Einbaulage der A-Säule in der Karosseriestruktur K etwa zu einem hier nicht dargestellten, für einen Fahrer vorgesehenen Ort hin gerichtet ist. Dies trägt dazu bei, dass die eingezeichneten Sichtfeldbereiche SF1 und SF2 beidseitig der A-Säule 1 durch dieselbe möglichst wenig eingeschränkt werden.

Zur Abdeckung der A-Säule 1 in einem Innenraum IR des Fahrzeuges ist ein in Einbaulage inneres Abdeckungsteil 18 mit einem länglichen, etwa U-förmigen und zwei Abdeckungsschenkel 19 aufweisenden Querschnitt und einer in Querschnittslängsrichtung weisenden Querschnittslängsachse b zur Abdeckung des Hohlprofiles 2 vorgesehen. Die Abdeckungsschenkel 19 übergreifen in Einbaulage das Hohlprofil 2 seitlich, wobei die Abdeckungsschenkel 19 seitlich an dem Hohlprofil über einen bestimmten Bereich anliegen. Die Querschnittslängsachse b des Abdeckungsteiles 18 ist gleich der Querschnittslängsachse a des Hohlprofiles 2 so ausgerichtet, dass sie in Einbaulage der A-Säule 1 in der Karosseriestruktur K zumindest etwa zu dem hier nicht dargestellten, für den Fahrer vorgesehenen Ort in dem von der Karosseriestruktur K begrenzten Innenraum IR hin weist., wodurch ebenfalls die Sichtfeldbereiche SF1 und SF2 beidseitig der A-Säule 1 möglichst gering durch dieselbe eingeschränkt werden.

Das Hohlprofil 2 weist einen ersten Aufnahmeabschnitt 20 zur Anlagerung der Windschutzscheibe W in einem Aufnahmerandabschnitt 21 und einen zweiten Aufnahmeabschnitt 22 zur Anlagerung der Seitenscheibe S in einem Aufnahmerandabschnitt 23 auf. Beide Aufnahmeabschnitte 20, 22 sind entsprechend der Form des ihnen jeweils zugeordneten Aufnahmerandabschnittes 21, 23 der Windschutzscheibe W bzw. der Seitenscheibe S abgeflacht. Wie der Figur 6 weiter entnehmbar, erstrecken sich die Aufnahmeabschnitte 20, 22 über einen bestimmten Umfangabschnitt und ferner, was hier nicht explizit gezeigt, in Längsrichtung des Hohlprofiles 2 zumindest über die Länge des ihnen zugeordneten Aufnahmerandabschnittes 21, 23 der Windschutzscheibe W bzw. der Seitenscheibe S. Somit können die Windschutzscheibe W bzw. die Seitenscheibe S unmittelbar auf dem geschlossenen Hohlprofil 2 so angelagert und in üblicher Weise unter Ausbildung einer festen Verbindung 24 in einer Verbindungsrichtung v verklebt und abgedichtet werden, dass sie Sichtfeldbereiche SF1 und SF2 beidseitig der A-Säule 1 nicht weiter einschränken. Die Verbindungsrichtung v ist in den Innenraum des Hohlprofiles 2 gerichtet. Die Verbindung 24 ist in Figur 6 durch Dreiecke als festes Auflager symbolisiert. Beide Aufnahmeabschnitte 21, 23 laufen zu einem Außenraum AR unter Ausbildung einer Kante 25 zusammen. Die abgeflachte Form der Aufnahmeabschnitte 20, 22 sowie die Kante 25 erhöhen die Verwindungssteifigkeit der A-Säule 1.

Die geschlossene Kontur der A-Säule ist mit der länglichen Querschnittsform und den beiden Aufnahmeabschnitten 21, 23, welche in Figur 6 lediglich schematisch und damit weniger komplex wiedergegeben, mittels Hydroforming oder Innenhochdruck-Umformen (IHU) ausgebildet und ist somit unter Beaufschlagung mit Innendruck und gleichzeitigem Stauchen eines entsprechenden, hier nicht gezeigten Rohlings hergestellt.

Zur Abdeckung des Hohlprofiles 2 und der verbundenen Anschlussblechteile 3 zum Außenraum AR hin ist ein in Einbaulage äußeres Abdeckungsteil 26 vorgesehen, das eine Lücke 27 zwischen dem Aufnahmerandabschnitt 21 der Windschutzscheibe W und dem Aufnahmerandabschnitt 23 der Seitenscheibe S überbrückt und abdichtet, wobei letzteres in Figur 6 symbolhaft durch eine Durchdringung von Abdeckungsteil 26 und Windschutzscheibe W bzw. Seitenscheibe S wiedergegeben ist.

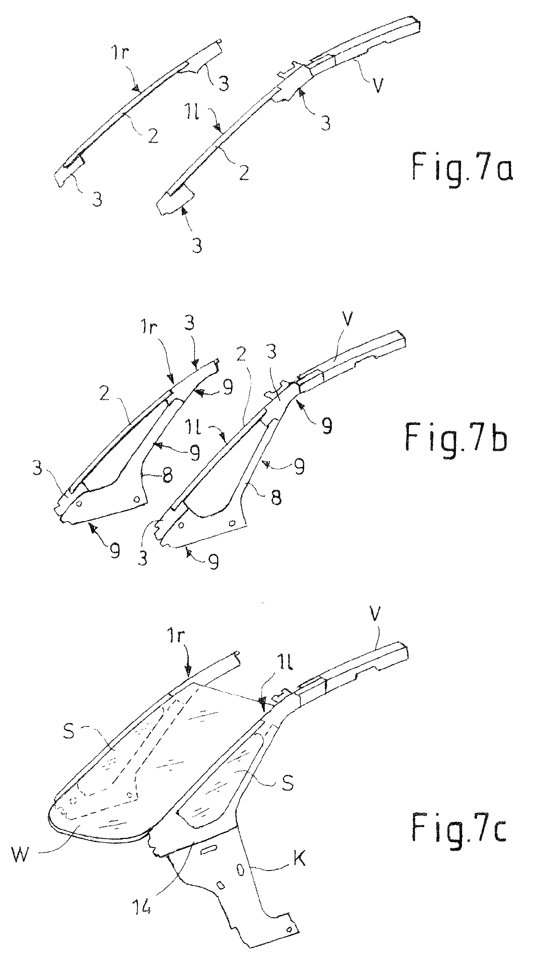

In den Figuren 7 a bis c, 8 und 9 werden verschiedene Möglichkeiten zur Montage der A-Säule und/oder deren Einbau in die Karosseriestruktur K wiedergegeben, wobei in Figur 7 die Montage zweier A-Säulen, d.h. so, wie sie als linke A-Säule 1l und rechte A-Säule 1r in die Karosseriestruktur verwandt werden, schematisch in mehreren Schritten gezeigt wird. In Figur 7a sind Hohlprofil 2 und Anschlussblechteile 3 bereits fest miteinander verbunden vormontiert, wobei die linke A-Säule 11 zusätzlich mit dem Verbindungsstück V vormontiert ist. In einem weiteren Schritt wird das Verbindungsglied angefügt und mittels Punktschweißung verbunden (Figur 7b), wobei die so vormontierten A-Säulen nun in die Karosseriestruktur mittels Punktschweißung eingefügt werden, welches in Figur 7c bereits erfolgt ist. Zusätzlich sind bereits in weiteren Montageschritten Windschutzscheibe W und Seitenscheiben S mit den A-Säulen 1l und 1 r verklebt.

In den Figuren 8 und 9 wird jeweils eine Seitenansicht auf eine Innenseite einer in Fahrtrichtung rechten Karosserieseite der Karosseriestruktur K gezeigt. In Figur 8 ist die A-Säule 1 gemäß Figur 4 mit Verbindungsstück V als ein vorgefertigtes Montagestück mittels Punktschweißung eingefügt, während in Figur 9 das Verbindungsglied gemäß Figur 5 ebenfalls mit dem Verbindungsstück als ein Montagestück mittels Punktschweißung eingefügt ist und in einem weiteren Montageschritt die restliche vormontierte A-Säule 1 gemäß Figur 1 mit Hohlprofil 2 und mittels WIG-Schweißens verbundenen Anschlussblechteilen 3 noch durch Punktschweißung einzufügen ist.

### Bezuaszeichenliste

- 1: A-Säule
- 1l: linke A-Säule
- 1r: rechte A-Säule
- 2: Hohlprofil
- 3: Anschlussblechteil
- 4: erste Anschlussseite
- 5: Hohlprofilaufnahme
- 6: zweite Anschlussseite
- 7: Anschlussflansch
- 8: Verbindungsglied
- 9: Anschlussblech
- 10: oberer Verbindungsabschnitt
- 11: unterer Verbindungsabschnitt
- 12: Befestigungsseite
- 13: oberer Anschlussabschnitt
- 14: unterer Anschlussabschnitt
- 15: Innenöffnung
- 16: oberer Schenkel
- 17: unterer Schenkel
- 18: inneres Abdeckungsteil
- 19: Abdeckungsschenkel
- 20: erster Aufnahmeabschnitt
- 21: Aufnahmerandabschnitt der Windschutzscheibe
- 22: zweiter Aufnahmeabschnitt
- 23: Aufnahmerandabschnitt der Seitenscheibe
- 24: Verbindung
- 25: Kante
- 26: äußeres Abdeckungsteil
- 27: Lücke
- a: Querschnittslängsachse
- b: Querschnittslängsachse
- v: Verbindungsrichtung
- AR: Außenraum
- IR: Innenraum
- K: Karosseriestruktur
- S: Seitenscheibe
- SF1, SF2: Sichtfeld
- V: Verbindungsstück
- W: Windschutzscheibe

## Patentansprüche

1. Säule als Teil einer Karosseriestruktur (K) eines Kraftwagens, wobei die Säule (1,1l,1r) zumindest im Bereich einer Scheibe (S) ein Hohlprofil (2) mit einem geschlossenen Querschnitt aufweist,
das Hohlprofil (2) zum Anschluss an die Karosseriestruktur (K) im Bereich des oberen und unteren Scheibenrandes mit jeweils einem Anschlussblechteil (3) verbunden ist,
das Hohlprofil (2) über die beiden Anschlussblechteile (3) mit der Karosseriestruktur (K) verbunden ist,
die beiden Anschlussblechteile (3) über ein Verbindungsglied (8) eines Anschlussbleches (9) fest miteinander verbunden sind, und
das Anschlussblech (9) eine Türdichtung für eine Fahrzeugtür aufnimmt.

2. Säule nach Anspruch 1,
**dadurch gekennzeichnet, dass**
die beiden Anschlussblechteile (3) und das Anschlussblech (9) jeweils separate Bauteile sind, die miteinander verbunden sind.

3. Säule nach Anspruch 1,
**dadurch gekennzeichnet, dass**
zumindest ein Anschlussblechteil (3) mit dem Anschlussblech (9) einteilig ausgeführt ist.

4. Säule nach einem der vorherigen Ansprüche,
**dadurch gekennzeichnet, dass**
das Anschlussblech (9) eine Dichtungsflansch aufweist, auf dem die Türdichtung befestigt ist.

5. Säule nach einem der vorherigen Ansprüche,
**dadurch gekennzeichnet, dass**
das Anschlussblech (9) und Hohlprofil (2) einen Scheibenrahmen für die Scheibe (S) bilden.

6. Säule nach einem der vorherigen Ansprüche,
**dadurch gekennzeichnet, dass**
das Anschlussblechteil (3) eine erste Anschlussseite (4) mit einer Hohlprofilaufnahme (5) für das Hohlprofil (2) umfasst, in der das Hohlprofil (2) mittels eines Fügeverfahrens kraft- und/oder formschlüssig verbunden ist, und eine zweite Anschlussseite (6) zur Anbindung der A-Säule (1,1l,1r) in der Karosseriestruktur (K) aufweist.

7. Säule nach einem der vorherigen Ansprüche,
**dadurch gekennzeichnet, dass**
das Verbindungsglied (8) eine abgewinkelte oder zweischenklige Form aufweist und jeweils mit einem Verbindungsabschnitt (10, 11) an einer Befestigungsseite (12) der Anschlussblechteile (3) angreift und dass das Anschlussblech (8) und das Hohlprofil (2) ein Strukturbauteil mit einer etwa dreiseitigen Außenkontur ausbildet.

8. Säule nach Anspruch 7,
**dadurch gekennzeichnet, dass**
zumindest ein Schenkel (16, 17) des Verbindungsgliedes (8) und zwar der in Einbaulage untere Schenkel (17) einen in Einbaulage mit einer Komponente nach unten weisenden Anschlussabschnitt (14) zur Anbindung des Verbindungsgliedes (8) an die Karosseriestruktur (K) aufweist.

9. Säule nach einem der Ansprüche 7 oder 8,
**dadurch gekennzeichnet, dass**
das Strukturbauteil eine der Außenkontur angepasste Innenöffnung (15) zur Aufnahme einer Seitenscheibe (S) umfasst.

10. Säule nach einem der vorherigen Ansprüche,
**dadurch gekennzeichnet, dass**
das Hohlprofil (2) eine längliche Querschnittsform mit einer in Querschnittslängsrichtung weisenden Querschnittslängsachse (a) aufweist und dass die Querschnittslängsachse (a) in Einbaulage der A-Säule (1,1l,1r) in der Karosseriestruktur (K) zumindest etwa zu einem für einen Fahrer vorgesehenen Ort in einem von der Karosseriestruktur (K) begrenzten Innenraum (IR) hin weist.

11. Säule nach einem der vorherigen Ansprüche,
**dadurch gekennzeichnet, dass**
das Hohlprofil (2) einen ersten Aufnahmeabschnitt (20) für einen seitlichen Aufnahmerandabschnitt (21) einer Windschutzscheibe (W) aufweist und dass sich der erste Aufnahmeabschnitt (20) über einen Umfangabschnitt und in Längsrichtung des Hohlprofiles (2) erstreckt und entsprechend der Form des Aufnahmerandabschnittes (21) der Windschutzscheibe (W) abgeflacht ist.

12. Säule nach Anspruch 11,
**dadurch gekennzeichnet, dass**
das Hohlprofil (2) einen umfänglich zum ersten Aufnahmeabschnitt (20) beabstandeten zweiten Aufnahmeabschnitt (22) für einen seitlichen Aufnahmerandabschnitt (23) der Seitenscheibe (S) aufweist und dass sich der zweite Aufnahmeabschnitt (22) über einen Umfangabschnitt und in Längsrichtung des Hohlprofiles (2) erstreckt und entsprechend der Form des Aufnahmerandabschnittes (23) der Seitenscheibe (S) abgeflacht ist.

13. Säule nach einem der Ansprüche 9 bis 12
**dadurch gekennzeichnet, dass**
ein in Einbaulage äußeres Abdeckungsteil (26) zur Abdeckung des Hohlprofiles (2) vorgesehen ist, das in Einbaulage der A-Säule (1,1l,1r) sowie der Windschutzscheibe (W) und der Seitenscheibe (S) an den Aufnahmerandabschnitten (21, 23) seitlich und von Außen über die Scheiben (S, W) ragt.

14. Verfahren zur Montage und zum Einbau einer A-Säule (1,1l,1r) gemäß den Ansprüchen 1 bis 13 in eine Karosseriestruktur (K) eines Fahrzeuges, wobei die A-Säule (1,1l,1r) ein Hohlprofil (2) und zwei Anschlussblechteile (3) zur Anbindung der A-Säule (1,1l,1r) an die Karosseriestruktur (K) umfasst, mit folgenden Verfahrensschritten:
Bereitstellen des Hohlprofiles (2) und der Anschlussblechteile (3),
Verbinden von Endabschnitten des Hohlprofiles (2) mit jeweils einem Anschlussblechteil (3) durch WIG-Schweißen, Löten oder Kleben,
Verbinden der Anschlussblechteile (3) mit der angrenzenden Karosseriestruktur (K) durch Punktschweißen.
